# FASCICULE DE BREVET EUROPEEN

(11) **EP 3 668 047 B1**
(45) Date de publication et mention de la délivrance du brevet: **10.11.2021**
(21) Numéro de dépôt: 19215848.3
(22) Date de dépôt: 12.12.2019
(51) Int. Cl.: H04L 29/06, H04W 12/06, G06F 21/31, H04L 9/32, H04L 9/08, H04W 12/069

(54) **PROCÉDÉ D'OUVERTURE D'UNE SESSION SÉCURISÉE SUR UN TERMINAL INFORMATIQUE**
ERÖFFNUNGSVERFAHREN EINER GESICHERTEN SESSION AN EINEM IT-ENDGERÄT
METHOD FOR OPENING A SECURE SESSION ON A COMPUTER TERMINAL

(30) Priorité: 12.12.2018 FR 1872786
(43) Date de publication de la demande: 17.06.2020
(73) Titulaire: Evidian, 78340 Les Clayes Sous Bois (FR)
(72) Inventeur: DEDIEU, Gérard, 95870 Bezons (FR); COSSARD, David, 95870 Bezons (FR); RODRIGO, Boksic, 95870 Bezons (FR)
(74) Mandataire: Cabinet Camus Lebkiri

(56) Documents cités:
- US-A1- 2015 310 431
- US-A1- 2016 070 894
- US-A1- 2018 331 837
- US-A1- 2018 331 837
- Falk Goossens: "So schützen Sie Benutzer-Logins von WordPress- & Co mit Zwei-Faktor-Authentifizierung", , 24 janvier 2017 (2017-01-24), XP055610189, Extrait de l'Internet: URL:https://www.hosteurope.de/blog/benutze r-login-mit-zwei-faktor-authentifizierung/ [extrait le 2019-07-31]

## Description

### DOMAINE TECHNIQUE DE L'INVENTION

L'invention se rapporte à un procédé d'ouverture d'une session sécurisée sur un terminal informatique.

Le domaine de l'invention est celui de l'authentification pour l'ouverture de session sur des terminaux informatiques. Plus spécifiquement, le domaine de l'invention est celui de l'authentification dite renforcée.

On entendra par terminal informatique, dans le cadre du présent document, tout dispositif informatique permettant à un utilisateur d'interagir avec des ressources réseaux ou des ressources locales au terminal. Sont en particulier visés les ordinateurs personnels, aussi appelés PC, Mac, ou stations de travail, qu'ils soient fixes ou portables-. La liste n'est pas exhaustive. Sont également visés les tablettes informatiques, les dispositifs hybrides entre tablettes et PC, ainsi que les smartphones (téléphones mobiles incluant un ordinateur de poche).

On entendra par terminal mobile un smartphone. Selon le rôle qui lui est attribué, un smartphone peut remplir le rôle de terminal informatique ou le rôle de terminal mobile. Cependant pour l'invention, le même dispositif physique ne doit pas tenir les deux rôles.

### ART ANTERIEUR

Dans le domaine des activités professionnelles, et de plus en plus dans le domaine des activités domestiques, l'accès à une ressource informatique est précédé par une opération d'authentification.

Il est nécessaire de s'authentifier pour accéder à un terminal informatique, c'est-à-dire pour ouvrir une session sur un ordinateur, et/ou pour accéder à une messagerie électronique ou plus généralement à une application. Une application est locale ou accessible à travers un navigateur internet. Cette authentification consiste en la saisie d'un identifiant et d'un mot de passe. Cette saisie est, ou n'est pas, sécurisée via l'utilisation d'un protocole de transmission chiffré. On pense par exemple à l'utilisation du protocole HTTPS pour les applications dîtes « en ligne ».

Pour les terminaux informatiques, on connait des solutions d'authentification renforcées basées sur l'utilisation d'un token physique. Un token physique est un dispositif qui affiche, lorsqu'il est sollicité, une séquence de caractères. Un token physique est associé à un compte utilisateur. Lors de l'authentification un utilisateur saisit :
- son identifiant,
- son mot de passe,
- une séquence de caractères produite par le token physique.

L'authentification est donc garantie par la connaissance d'un premier secret et renforcée par la possession d'un dispositif : le token physique.

Cette authentification renforcée est une des plus sûre qui existe à l'heure actuelle. Elle n'est cependant pas sans présenter certains inconvénients.

Ce mode d'authentification impose en effet d'avoir en permanence sur soi un dispositif dédié à la production de la séquence de caractères. Pour réduire son encombrement et garantir sa durabilité, un tel dispositif est en général équipé d'un écran très petit et non éclairé. Ces caractéristiques rendent difficile la lecture de la séquence de caractères. De plus, toujours pour des raisons de sécurité, la séquence de caractères reste affichée un temps limité et n'est valable que pendant un temps lui aussi limité. Il n'est donc pas aisé de se servir d'un tel token physique.

Un autre problème majeur de ces tokens physiques est qu'ils doivent rester synchronisés avec un serveur dédié à la gestion des tokens. Ainsi, si par inadvertance le token est sollicité en dehors d'une tentative d'ouverture de session , le token peut être désynchronisé et rendre toute tentative de connexion ultérieure impossible.

En outre, l'inconvénient le plus immédiat est qu'il faut saisir trois informations pour s'authentifier.

Un autre problème pour permettre une authentification renforcée est qu'il faut que les moyens employés pour réaliser cette authentification ne soient pas compromis. Il ne faut donc pas que des informations suffisantes à l'authentification puissent être collectées ou interceptées. La publication de demande de brevet

US2018/331837 A1 décrit une méthode d'authentification présentant les inconvénients ici mentionnés.

### EXPOSE DE L'INVENTION

L'invention vise à remédier à tout ou partie des problèmes de l'état de la technique identifiés ci-dessus, et notamment à proposer des moyens pour permettre une authentification renforcée par la détention d'un dispositif tiers tout en supprimant les étapes de saisie des informations d'authentification.

L'invention propose aussi l'utilisation de moyens publics pour permettre cette authentification, tout en garantissant la non compromission des données d'authentification.

Par moyen public on entend un moyen qui n'est pas sur le même réseau que les ressources auxquelles souhaite accéder l'utilisateur qui s'authentifie. La première de ces ressources est un serveur d'authentification. Cette notion de réseau peut ici s'entendre comme une notion topologique ou une notion juridique. Dans le cas de la notion juridique, deux réseaux différents sont deux réseaux qui ne sont pas gérés par les mêmes entités juridiques. Un gestionnaire du serveur d'authentification parle d'un serveur externe.

Dans ce dessein, un aspect de l'invention se rapporte à un procédé d'ouverture d'une session sécurisée sur un terminal informatique connecté à un serveur d'authentification, caractérisé en ce que l'ouverture de session est réalisée par la mise en œuvre d'au moins les étapes suivantes :
- Emission, par le serveur d'authentification, d'une notification descendante à destination d'un terminal mobile , à travers un serveur de notification temps réel, la notification descendante comportant un ensemble de données d'authentification parmi lesquelles au moins une clé de session, les données d'authentification étant chiffrées en utilisant un chiffrement asymétrique, une clé publique étant connue du serveur d'authentification, une clé privée étant connue seulement du terminal mobile, la clé privée étant associée à la clé publique ;
- Emission, par le terminal mobile, d'une notification montante à destination du serveur d'authentification, à travers le serveur de notification temps réel, la notification montante comportant un sous-ensemble des données d'authentification, au moins ce sous-ensemble de données d'authentification étant chiffré en utilisant un chiffrement symétrique utilisant comme clé au moins la clé de session ;
- Vérification, par le serveur d'authentification, de la conformité des données d'authentification comprises dans la notification montante par rapport aux données d'authentification émises comprises dans la notification descendante ;
- Autorisation de l'ouverture de la session en cas de vérification aboutie

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles :
- les notifications émises vers le serveur d'authentification transitent par un serveur intermédiaire.
- le serveur intermédiaire est un serveur XMPP.
- le serveur de notification temps réel est public.
- les données d'authentification comportent un identifiant d'utilisateur et un mot de passe à usage unique.
- la clé publique et la clé privée sont produites par le terminal mobile au cours d'une phase d'enrôlement du dispositif mobile sur le serveur d'authentification.
- la phase d'enrôlement est réalisée par la mise en œuvre d'au moins les étapes suivantes :
   ∘ acquisition (4000), par le terminal mobile :
      ▪ d'une clé d'enrôlement ;
      ▪ d'un identifiant du serveur d'authentification ;
      ▪ d'un identifiant utilisateur, et ;
      ▪ de données de configuration de communication avec le serveur de notification temps réel ;
   ∘ emission (4010), par un outil d'enrôlement, d'un message vers le serveur d'authentification, ce message comportant :
      ▪ l'identifiant utilisateur ;
      ▪ la clé d'enrôlement ;
   ∘ production (4030), par le terminal mobile, de la clé publique et de la clé privée ;
   ∘ emission, par le terminal mobile, d'une notification montante à destination du serveur d'authentification, la notification montante comportant au moins :
      ▪ l'identifiant d'utilisateur et la clé publique chiffrés en utilisant la clé d'enrôlement ainsi que ;
      ▪ l'identifiant utilisateur ;
      ▪ l'identifiant du serveur d'authentification.
   ∘ enrôlement par le serveur d'authentification.
- l'identifiant utilisateur est un identifiant temporaire associé à un identifiant permanent.
- l'étape d'acquisition est réalisée via la lecture d'un QR code.

### BREVE DESCRIPTION DES FIGURES

D'autres caractéristiques et avantages de l'invention ressortiront à la lecture de la description qui suit, en référence aux figures annexées, qui illustrent :
- Figure 1 : une illustration de moyens techniques permettant la mise en œuvre du procédé selon l'invention ;
- Figure 2: une illustration d'étape du procédé selon l'invention ;
- Figure 3: une illustration d'un enrichissement d'une base de données utilisateurs d'un serveur d'authentification ;
- Figure 4: une illustration d'étape du procédé selon l'invention pour l'enrôlement d'un dispositif mobile.

Pour plus de clarté, les éléments identiques ou similaires sont repérés par des signes de référence identiques sur l'ensemble des figures où ils apparaissent.

L'invention sera mieux comprise la lecture de la description qui suit et à l'examen des figures qui l'accompagnent. Celles-ci sont présentées à titre indicatif et nullement limitatives de l'invention.

### DESCRIPTION DETAILLEE

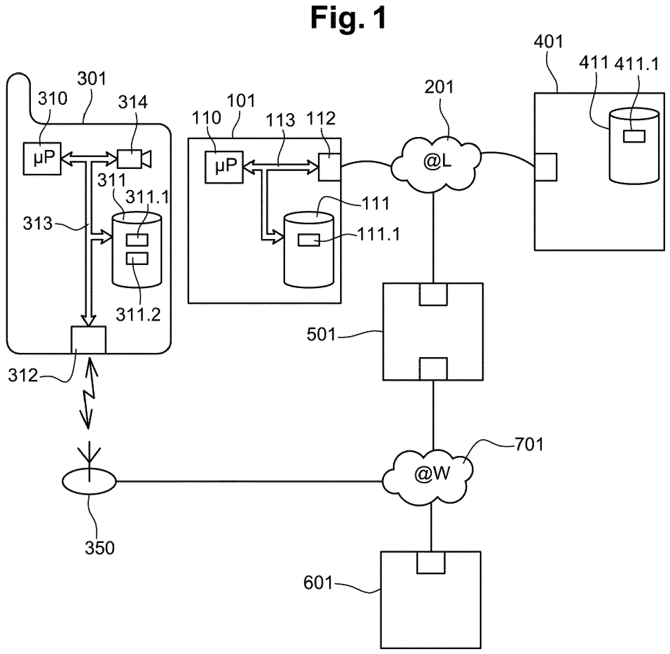

[Fig. 1] montre une illustration de moyens techniques permettant la mise en œuvre du procédé selon l'invention.

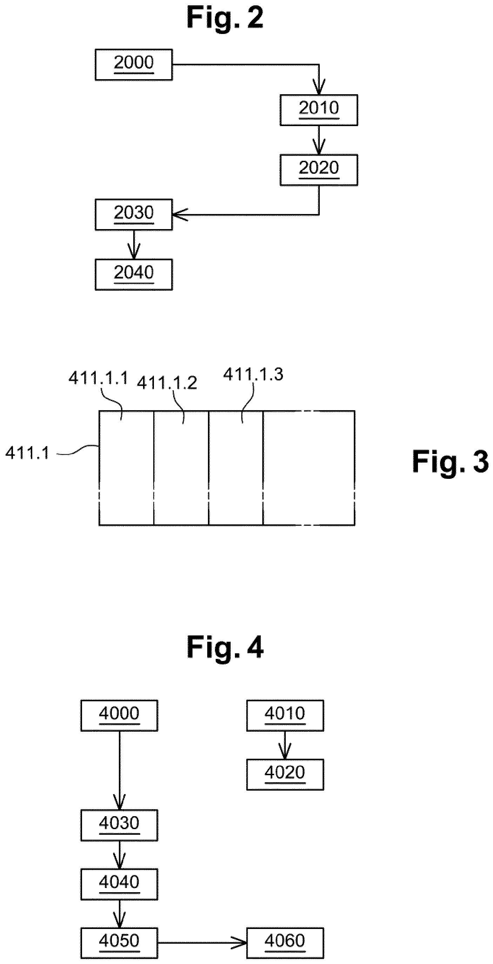

[Fig. 2] montre une illustration d'étape du procédé selon l'invention.
[Fig. 3] montre une illustration d'un enrichissement d'une base de données utilisateurs d'un serveur d'authentification.
[Fig. 4] montre une illustration d'étape du procédé selon l'invention pour l'enrôlement d'un dispositif mobile.

La figure 1 montre une infrastructure technique dans laquelle l'invention peut être mise en œuvre. La figure 1 montre un terminal 101 informatique auquel un utilisateur doit se connecter pour accéder à des ressources du terminal informatique ou via le terminal informatique.

Des ressources du terminal informatiques sont, par exemple :
- des ressources de stockages locales, disque dur ou autre,
- des capacités de traitements,
- des logiciels aussi appelés applications,
- une connexion réseau permettant d'accéder à des ressources à travers un réseau 201 local auquel le terminal informatique est connecté ;
- ... ; la liste n'est pas exhaustive.

Les termes "disque dur" désignent un moyen de stockage de masse. Il peut donc s'agir d'un disque dur local, réseau, d'une grappe de disques, ... La liste n'est pas exhaustive

La figure 1 montre que le terminal 101 informatique comporte au moins
- un microprocesseur 110,
- des moyens de stockages 111, par exemple un disque dur,
- une interface 112 réseau, par exemple une carte Ethernet.

Le microprocesseur du terminal informatique, les moyens de stockage du terminal informatique et l'interface réseau du terminal informatique sont interconnectés par un bus 113.

Lorsque l'on prête une action à un dispositif, celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Ainsi toutes les étapes décrites sont mises en œuvre par un microprocesseur.

Tel que décrit, le terminal 101 informatique est capable de recevoir et d'émettre des messages via son interface réseau. C'est l'interface réseau 112 du terminal 101 informatique qui permet sa connexion au réseau 201 local.

La figure 1 montre que les moyens 111 de stockage du terminal 101 informatique comportent au moins :
- une zone 111.1 comportant des codes instructions correspondant à une partie de la mise en œuvre du procédé selon l'invention.

La figure 1 montre aussi un terminal 301 mobile de type Smartphone. Un Smartphone est aussi appelé téléphone intelligent. Cela englobe également les tablettes.

La figure 1 montre que le terminal 301 mobile comporte au moins :
- un microprocesseur 310 ;
- des moyens de stockage 311, par exemple une mémoire flash ;
- une caméra 314,
- au moins une interface 312 réseau, par exemple un module radio de type téléphonie mobile (GSM, GPRS, UMTS, LTE...), un module radio Wifi, et/ou un module radio Bluetooth, la liste n'étant pas exhaustive.

Le microprocesseur du terminal 301 mobile, les moyens de stockage du dispositif mobile, la caméra du dispositif mobile et l'interface réseau du dispositif mobile sont interconnectés par un bus 313.

La figure 1 montre que les moyens de stockage du dispositif mobile comportent :
- une zone 311.1 comportant des codes instructions correspondant à une partie de la mise en œuvre de l'invention ;
- une zone 311.2 pour configurer pour enregistrer une clé privée.

La figure 1 montre également :
- un serveur 401 d'authentification ;
- un serveur 501 mandataire, on parle on parle aussi de serveur « proxy » ;
- un serveur 601 de notification temps réel.

Le serveur 401 d'authentification, le serveur 501 mandataire et le serveur 601 de notification temps réel sont des dispositifs de traitement configurés pour réaliser des actions. On ne décrira de leur composition que les moyens utiles à la compréhension de l'invention.

La figure 1 montre que le serveur 401 d'authentification comporte des moyens 411 de stockage. Les moyens de stockage du serveur 401 d'authentification comportent une zone 411.1 base de données utilisateurs. Une telle base de données est, par exemple, un annuaire LDAP (protocole léger d'accès à un annuaire). Pour l'invention cette base de données est enrichie pour permettre d'associer à un utilisateur 411.1.1 référencé dans la base au moins les informations suivantes :
- un identifiant 411.1.2 pour un service de notification temps réel. On parle aussi d'adresse de notification. Il s'agit d'un identifiant utilisateur pour le serveur de notification. Il peut aussi s'agir d'un identifiant d'appareil, un utilisateur donné pouvant posséder plusieurs appareils ;
- une clé publique 411.1.3.

Un serveur est un dispositif apte à recevoir des messages, via un protocole de communication, et à émettre un message en réponse au message reçu. Pour la simplicité de la description on représente les serveurs comme des dispositifs à part entière. Mais, dans la pratique, il est tout à fait possible qu'un même dispositif physique héberge plusieurs services et donc puisse être désigné comme serveur d'un premier service et serveur d'un deuxième service.

La figure 1 montre que le terminal 101 informatique, le serveur 401 d'authentification et le serveur 501 mandataire sont connectés au même réseau 201 local. Ils peuvent donc communiquer entre eux.

La figure 1 montre également que :
- le serveur 501 mandataire est connecté à un réseau 701 public, par exemple, le réseau Internet ;
- le serveur 601 est connecté au réseau 701 public ;
- le terminal 301 mobile est connecté à un point 350 d'accès lui-même connecté au réseau 701 public. Le point 350 d'accès est, par exemple, une station de base d'un réseau de téléphonie mobile, ou un point d'accès Wifi.

La figure 1 illustre le fait que les serveurs publics sont le serveur 501 mandataire et le serveur 701 de notification temps réel : ces deux serveurs sont directement accessibles à tout dispositif connecté au réseau 701 public.

Un serveur de notification temps réel est un serveur qui permet de pousser des notifications vers des clients. Dans l'invention, les clients d'un tel serveur sont au moins le terminal mobile et le serveur d'authentification. Dans une variante de l'invention, le serveur d'authentification est client à travers le serveur mandataire. On dit aussi que le serveur mandataire est un serveur intermédiaire. Les rôles d'un tel serveur intermédiaire sont multiples : protection, gestion de charge, transcodage, ...

Dans une variante de l'invention le serveur mandataire est un serveur dit XMPP qui effectue un transcodage entre le serveur de notification temps réel dont c'est le protocole natif et le serveur d'authentification. Ainsi on peut mettre en place la solution selon l'invention sans impact majeur dans une infrastructure existante.

Dans une autre variante de l'invention, le serveur mandataire est un serveur XMPP et un gestionnaire de charge. Il est ainsi possible de gérer un grand nombre de demandes d'ouverture de session sécurisée.

Dans une mise en œuvre de l'invention, on peut utiliser comme serveur de notification temps réel le service « Google Cloud Messaging » (marque déposée), son successeur « Firebase Cloud Messaging » (marque déposée) ou APNs « Apple Push Notification service » (marque déposée).

La figure 2 montre une étape 2000 d'émission, par le serveur 401 d'authentification, d'une notification descendante à destination du terminal mobile. Cette notification est une demande d'authentification renforcée. Le terminal mobile est associé, dans la base de données utilisateur du serveur d'authentification, à un utilisateur. Cette association se fait, par exemple, via l'identifiant 411.1.2 pour un service de notification temps réel.

Dans la pratique l'étape d'émission est déclenchée par une action de l'utilisateur sur le terminal informatique. Cette action est une tentative d'ouverture de session.

Pour émettre cette demande d'authentification renforcée le serveur d'authentification produit un ensemble de données d'authentification. Ces données d'authentification comportent au moins une clé de session d'authentification. Dans une variante avantageuse de l'invention, l'ensemble de données d'authentification comporte également des données parmi les suivantes :
- un identifiant utilisateur pour le serveur d'authentification ;
- un mot de passe à usage unique ;
- un identifiant du serveur d'authentification.

La clé de session est produite à la demande et est associée à l'identifiant d'utilisateur, par exemple via la base de données utilisateurs.

Une fois ces données d'authentification produites, le serveur 401 d'authentification les chiffre avec la clé publique associée à l'utilisateur et les émet vers le terminal 301 mobile, via le serveur 501 mandataire et le serveur 601 de notification temps réel. Il s'agit d'une notification descendante à destination du terminal mobile. On dit aussi que le serveur de notification temps réel pousse la notification vers le terminal mobile. L'adresse de destination utilisée pour l'émission de cette notification est l'identifiant utilisateur pour le serveur de notification associé à l'utilisateur dans la base de données utilisateurs du serveur d'authentification.

Usuellement, le sens de transit des notifications est considéré du point de vue des terminaux mobile. Une notification descendante est reçue par un terminal mobile. Une notification montante est émise par un terminal mobile. Pour une notification montante, on parle aussi de notification « upstream ».

Dans une étape 2010 de réception de la notification montante, le terminal mobile reçoit la notification de demande d'authentification émise par le serveur d'authentification. Dans cette étape le terminal mobile utilise la clé 311.2 privée pour déchiffrer le contenu de la notification reçue.

Dans une variante de l'invention l'accès à la clé privé et/ou son utilisation est soumise à un déverrouillage. Un tel déverrouillage est, par exemple, la saisie d'un code PIN, une empreinte digitale, une empreinte rétinienne ou une reconnaissance faciale.

Après l'étape 2010 de réception de la notification, montante le terminal mobile produit une réponse, une notification d'authentification, en utilisant les données contenues dans l'ensemble de données d'authentification. Dans l'exemple de la description, le terminal mobile produit une notification dont le contenu chiffré est :
- L'identifiant utilisateur pour le serveur d'authentification ;
- Le mot de passe à usage unique.

Le chiffrement est réalisé en utilisant un algorithme de chiffrement symétrique. La clé utilisée pour réaliser ce chiffrement est la clé de session. La notification d'authentification comporte aussi, en clair, l'identifiant d'utilisateur. Une fois produite la notification d'authentification est émise (2020) à destination du serveur d'authentification via le serveur de notification temps réel. Le destinataire de la notification d'authentification est le serveur identifié par l' « identifiant de serveur d'authentification » dans l'ensemble de données d'authentification. Dans la pratique cela se traduit par le fait que le serveur de notification temps réel va envoyer la notification au serveur mandataire. Le serveur mandataire met en forme la notification et la transmet au serveur d'authentification.

Dans une étape 2030 le serveur 501 d'authentification reçoit une réponse à la notification émise à l'étape 2000 d'émission d'une demande d'authentification renforcée. Cette réponse est la notification d'authentification émise par le terminal mobile. Cette réponse comporte en clair un identifiant utilisateur qui permet au serveur d'authentification de retrouver un enregistrement utilisateur dans la base données utilisateur, ou dans une zone mémoire dédiée à la gestion de cet échange de messages. Grace à cet enregistrement, le serveur d'authentification retrouve la clé de session et déchiffre le contenu chiffré de la réponse. Le serveur d'authentification peut alors procéder à une opération de vérification en vérifiant si le mot de passe à usage unique est conforme, identique, à celui qui a été émis dans la notification de demande d'authentification renforcée.

Si le mot de passe est conforme alors, dans une étape 2040, le serveur d'authentification émet une autorisation d'ouverture de session. On dit alors que l'opération de vérification a abouti.

Dans la pratique, le serveur d'authentification émet une demande d'authentification à la suite d'une sollicitation. Une telle sollicitation est, par exemple, une action d'un utilisateur sur le terminal informatique. Une telle action est, par exemple :
- la saisie d'un identifiant en vue d'ouvrir une session ;
- la sortie d'un état de veille ;
- ... la liste n'est pas exhaustive.

Un utilisateur d'un terminal informatique commence donc son action de déverrouillage comme dans l'état de la technique mais, grâce à l'invention, il la poursuit via son téléphone mobile qui se comporte comme un jeton physique et permet une authentification forte. L'invention permet aussi d'utiliser une infrastructure publique pour ouvrir une session sur un domaine privé sans compromettre les données d'authentification.

La figure 4 montre une étape 4000 d'acquisition, dans laquelle un le terminal mobile fait l'acquisition de données pour son enrôlement. Ces données sont :
- une clé d'enrôlement ;
- un identifiant du serveur d'authentification ;
- un identifiant utilisateur pour le serveur d'authentification ;
- des données de configuration de communication avec le serveur de notification temps réel. Ces données sont les informations requises pour pouvoir utiliser le serveur de notification pour émettre et recevoir des notifications. Ces données sont :
   - un identifiant du serveur de notification ;
   - un identifiant d'application pour le serveur de notification.

Ces donnes sont acquises, par exemple, en scannant un code QR. Le code QR est affiché, par exemple, par un écran du terminal informatique à la suite d'une sollicitation par un utilisateur du terminal informatique. Une telle sollicitation est de la même nature que celle déjà décrite. Dans une variante préféré le code QR est affiché après déverrouillage du terminal informatique. Ce déverrouillage est réalisé selon un état de la technique ou selon l'invention en utilisant un terminal mobile déjà enrôlé.

La figure 4 montre également une étape 4010 dans laquelle le dispositif affichant le code QR émet à destination du serveur d'authentification un message de pré-enrôlement comportant au moins l'identifiant utilisateur pour le serveur d'authentification et la clé d'enrôlement tels que contenus dans le code QR. Ce message est envoyé en utilisant une interface de communication sécurisée telle que les SSPI.

La figure 4 monte une étape 4020 dans laquelle le serveur d'authentification reçoit le message de pré-enrôlement et associe, par exemple dans la base de données utilisateur, l'identifiant utilisateur et la clé d'enrôlement. Cette association peut aussi être réalisé dans une base de données temporaire dédiée à cet usage.

La figure 4 montre une étape 4030, suivant l'étape d'acquisition, dans laquelle le terminal mobile produit une biclé. Le fait que l'on dise qu'une clé privée est associée à une clé publique signifie que les deux clés forment une biclé pour un algorithme de chiffrement asymétrique.

Une fois la biclé produite, le terminal mobile stocke la clé privée dans la zone 311.2. Cette clé privée est connue seulement du terminal mobile. C'est à dire qu'elle n'a pas vocation à être transmise ni à être utilisé par un autre dispositif. Cette clé privée est, idéalement, enregistrée dans un coffre-fort numérique ou un composant cryptographique du terminal mobile. En d'autres termes, la clé privée ne quitte jamais le terminal mobile.

Une fois la biclé produite, le terminal mobile produit une notification d'enrôlement dont le contenu chiffré comporte :
- la clé publique ;
- l'identifiant d'utilisateur pour le serveur de notification temps réel.

Le contenu chiffré est chiffré avec la clé d'enrôlement. La notification d'enrôlement comporte, en clair, l'identifiant d'utilisateur pour le serveur d'authentification.

Une fois la notification d'enrôlement produite, elle est émise (4050) vers le serveur d'authentification en utilisant les informations contenues dans le code QR.

Dans une étape 4060, le serveur d'authentification reçoit une notification d'enrôlement. Cette notification est associée à un utilisateur du serveur d'authentification. Le serveur d'authentification peut donc retrouver une clé d'enrôlement et l'utiliser pour déchiffrer le contenu chiffré de la notification d'enrôlement. Si le déchiffrement aboutit, alors le serveur d'authentification associe, à l'utilisateur dans la base de données utilisateurs :
- la clé publique contenu dans le message d'enrôlement ;
- l'identifiant pour le serveur de notification. Cet identifiant correspond à l'émetteur de la notification d'enrôlement.

A partir de ce moment le serveur d'authentification est capable d'utiliser le terminal mobile comme jeton physique.

L'invention utilise donc le terminal informatique comme outils d'enrôlement.

Dans une variante de l'invention, pour l'enrôlement, on utilise un identifiant utilisateur temporaire, ou jeton d'enrôlement. Il s'agit d'un identifiant qui est temporairement associé à un utilisateur dans la base de données utilisateurs. Cela permet de ne pas faire circuler en clair un véritable identifiant utilisateur pour le serveur authentification. Cet identifiant temporaire est géré comme la clé d'enrôlement. Il est donc émis avec la clé d'enrôlement.

Une fois l'enrôlement effectué, le terminal mobile peut être utilisé comme jeton physique dans une authentification renforcée. Dans une variante le serveur émet, une fois l'enrôlement effectué, un message permettant au terminal informatique d'afficher un message de retour relatif un enrôlement. Ce message peut également être envoyé au terminal mobile via une notification.

On note que l'enrôlement porte sur l'utilisateur du terminal mobile et/ou sur le terminal mobile lui-même. L'élément qui est associé à l'utilisateur du serveur d'authentification est un identifiant pour le serveur de notification, c'est-à-dire un identifiant qui permet au terminal mobile de recevoir des notifications temps réel. Un tel identifiant dépend sur service de notification temps réel utilisé. Un enrôlement, au sens de l'invention revient donc à permettre au serveur d'authentification d'envoyer des notifications sécurisées à un terminal mobile de l'utilisateur.

On remarque que, grâce à l'invention, aucune donnée sensible n'est accessible au serveur de notification temps réel. L'authentification est donc bien sécurisée et renforcée même si on utilise des serveurs de notifications temps réel publics.

## Revendications

1. Procédé d'ouverture d'une session sécurisée sur un terminal (101) informatique connecté à un serveur (401) d'authentification, dans lequel l'ouverture de session est réalisée par la mise en œuvre d'au moins les étapes suivantes :
- Emission (2000), par le serveur d'authentification, d'une notification descendante à destination d'un terminal mobile, à travers un serveur (601) de notification temps réel, la notification descendante comportant un ensemble de données d'authentification parmi lesquelles au moins une clé de session, les données d'authentification étant chiffrées en utilisant un chiffrement asymétrique, une clé publique étant connue du serveur d'authentification, une clé privée étant connue seulement du terminal mobile, la clé privée étant associée à la clé publique ;
- Emission (2020), par le terminal mobile, d'une notification montante à destination du serveur d'authentification, à travers le serveur de notification temps réel, la notification montante comportant un sous-ensemble des données d'authentification, au moins ce sous-ensemble de données d'authentification étant chiffré en utilisant un chiffrement symétrique utilisant comme clé au moins la clé de session ;
- Vérification (2030), par le serveur d'authentification, de la conformité des données d'authentification comprises dans la notification montante par rapport aux données d'authentification émises comprises dans la notification descendante ;
- Autorisation (2040) de l'ouverture de la session en cas de vérification aboutie.

2. Procédé d'ouverture d'une session sécurisée selon la revendication 1 dans lequel les notifications émises vers le serveur d'authentification transitent par un serveur (501) intermédiaire.

3. Procédé d'ouverture d'une session sécurisée selon la revendication 2 dans lequel le serveur intermédiaire est un serveur XMPP.

4. Procédé d'ouverture d'une session sécurisée selon l'une des revendications précédentes, dans lequel le serveur de notification temps réel est public.

5. Procédé d'ouverture d'une session sécurisée selon l'une des revendications précédentes dans lequel les données d'authentification comportent un identifiant d'utilisateur et un mot de passe à usage unique.

6. Procédé d'ouverture d'une session sécurisée selon l'une des revendication précédentes, dans lequel la clé publique et la clé privée sont produites par le terminal mobile au cours d'une phase d'enrôlement du dispositif mobile sur le serveur d'authentification.

7. Procédé d'ouverture d'une session sécurisée selon la revendication précédente dans lequel la phase d'enrôlement est réalisée par la mise en œuvre d'au moins les étapes suivantes :
- Acquisition (4000), par le terminal mobile :
- D'une clé d'enrôlement ;
- D'un identifiant du serveur d'authentification ;
- D'un identifiant utilisateur, et ;
- De données de configuration de communication avec le serveur de notification temps réel ;
- Emission (4010), par un outil d'enrôlement, d'un message vers le serveur d'authentification, ce message comportant :
- L'identifiant utilisateur ;
- La clé d'enrôlement ;
- Production (4030), par le terminal mobile, de la clé publique et de la clé privée ;
- Emission, par le terminal mobile, d'une notification montante à destination du serveur d'authentification, la notification montante comportant au moins :
- L'identifiant d'utilisateur et la clé publique chiffrés en utilisant la clé d'enrôlement ainsi que ;
- L'identifiant utilisateur ;
- L'identifiant du serveur d'authentification.
- Enrôlement par le serveur d'authentification.

8. Procédé d'ouverture d'une session sécurisée selon la revendication 7 dans lequel l'identifiant utilisateur est un identifiant temporaire associé à un identifiant permanent.

9. Procédé d'ouverture d'une session sécurisée selon la revendication 7 dans lequel l'étape d'acquisition est réalisée via la lecture d'un QR code.

## Patentansprüche

1. Eröffnungsverfahren einer gesicherten Session auf einem IT-Gerät (101), das mit einem Authentifizierungsserver (401) verbunden ist, wobei das Eröffnen der Session durch Umsetzen mindestens folgender Schritte erfolgt:
- Senden (2000), durch den Authentifizierungsserver, einer Downlink-Benachrichtigung an ein mobiles Endgerät über einen Echtzeit-Benachrichtigungsserver (601), wobei die Downlink-Benachrichtigung einen Satz Authentifizierungsdaten einschließlich mindestens eines Session-Schlüssels umfasst, wobei die Authentifizierungsdaten mittels einer asymmetrischen Verschlüsselung verschlüsselt werden, wobei ein öffentlicher Schlüssel dem Authentifizierungsserver bekannt ist, ein privater Schlüssel nur dem mobilen Endgerät bekannt ist und der private Schlüssel mit dem öffentlichen Schlüssel verknüpft ist;
- Senden (2020), durch das mobile Endgerät, einer Uplink-Benachrichtigung an den Authentifizierungsserver über den Echtzeit-Benachrichtigungsserver, wobei die Uplink-Benachrichtigung eine Teilmenge der Authentifizierungsdaten umfasst, wobei mindestens diese Teilmenge der Authentifizierungsdaten mittels einer symmetrischen Verschlüsselung verschlüsselt wird, die als Schlüssel mindestens den Session-Schlüssel verwendet;
- Überprüfen (2030), durch den Authentifizierungsserver, der Übereinstimmung der in der Uplink-Benachrichtigung enthaltenen Authentifizierungsdaten mit den in der Downlink-Benachrichtigung enthaltenen gesendeten Authentifizierungsdaten;
- Autorisieren (2040) des Eröffnens der Session bei erfolgreicher Verifizierung.

2. Eröffnungsverfahren einer gesicherten Session nach Anspruch 1, wobei die an den Authentifizierungsserver gesendeten Benachrichtigungen einen Zwischenserver (501) durchlaufen.

3. Eröffnungsverfahren einer gesicherten Session nach Anspruch 2, wobei der Zwischenserver ein XMPP-Server ist.

4. Eröffnungsverfahren einer gesicherten Session nach einem der vorstehenden Ansprüche, wobei der Echtzeit-Benachrichtigungsserver öffentlich ist.

5. Eröffnungsverfahren einer gesicherten Session nach einem der vorstehenden Ansprüche, wobei die Authentifizierungsdaten eine Benutzerkennung und ein Einmalpasswort umfassen.

6. Eröffnungsverfahren einer gesicherten Session nach einem der vorstehenden Ansprüche, wobei der öffentliche Schlüssel und der private Schlüssel durch das mobile Endgerät während einer Registrierungsphase der mobilen Vorrichtung auf dem Authentifizierungsserver erzeugt werden.

7. Eröffnungsverfahren einer gesicherten Session nach einem der vorstehenden Ansprüche, wobei die Registrierungsphase durch Umsetzen mindestens folgender Schritte erfolgt:
- Erfassen (4000), durch das mobile Endgerät:
- eines Registrierungsschlüssels;
- einer Kennung des Authentifizierungsservers; und
- einer Benutzerkennung; und
- von Konfigurationsdaten zur Kommunikation mit dem Echtzeit-Benachrichtigungsserver;
- Senden (4010), durch ein Registrierungstool, einer Nachricht an den Authentifizierungsserver, wobei die Nachricht umfasst:
- die Benutzerkennung;
- den Registrierungsschlüssel;
- Erzeugen (4030), durch das mobile Endgerät, des öffentlichen Schlüssels und des privaten Schlüssels;
- Senden, durch das mobile Endgerät, einer Uplink-Benachrichtigung an den Authentifizierungsserver, wobei die Uplink-Benachrichtigung mindestens umfasst:
- die Benutzerkennung und den öffentlichen Schlüssel, die unter Verwendung des Registrierungsschlüssels verschlüsselt werden; sowie
- die Benutzerkennung;
- die Kennung des Authentifizierungsservers.
- Registrierung durch den Authentifizierungsserver.

8. Eröffnungsverfahren einer gesicherten Session nach Anspruch 7, wobei die Benutzerkennung eine temporäre Kennung ist, die einer permanenten Kennung zugeordnet ist.

9. Eröffnungsverfahren einer gesicherten Session nach Anspruch 7, wobei der Schritt des Erfassens durch Lesen eines QR-Codes erfolgt.

## Claims

1. A secure login method on a computer terminal (101) connected to an authentication server (401), wherein the login is carried out by the implementation of at least the following steps:
- Issuing (2000), by the authentication server, of a downward notification to a mobile terminal, through a real-time notification server (601), the downward notification comprising a set of authentication data among which at least one session key, the authentication data being crypted using an asymmetric encryption, a public key being known by the authentication server, a private key being only known by the mobile terminal, the private key being associated to the public key;
- Issuing (2020), by the mobile terminal, of an upward notification to the authentication server, through the real-time notification server, the upward notification comprising a subset of the authentication data, at least this subset of authentication data being crypted using a symmetric encryption using as key at least the session key;
- Verification (2030), by the authentication server, of the compliance of the authentication data comprised within the upward notification relative to the issued authentication data comprised in the downward notification;
- Authorization (2040) of the login in case the verification is successful.

2. A secure login method according to claim 1, wherein the notifications issued to the authentication server pass through an intermediate server (501).

3. A secure login method according to claim 2, wherein the intermediate server is an XMPP server.

4. A secure login method according to one of the preceding claims, wherein the real-time notification server is public.

5. A secure login method according to one of the preceding claims, wherein the authentication data comprise a user identifier and a one-time password.

6. A secure login method according to one of the preceding claims, wherein the public key and the private key are produced by the mobile terminal during an enrollment phase of the mobile device on the authentication server.

7. A secure login method according to the preceding claim, wherein the enrollment phase is carried out by the implementation of at least the following steps:
- Acquisition (4000), by the mobile terminal:
- Of an enrollment key;
- Of an authentication server identifier;
- Of a user identifier, and;
- Of configuration data of communication with the real-time notification server;
- Issuing (4010), by an enrollment tool, of a message to the authentication server, this message comprising:
- The user identifier;
- The enrollment key;
- Production (4030), by the mobile terminal, of the public key and of the private key;
- Issuing, by the mobile terminal, of an upward notification to the authentication server, the upward notification comprising at least:
- The user identifier and the public key crypted using the enrollment key as well as;
- The user identifier;
- The authentication server identifier.
- Enrollment by the authentication server.

8. The secure login method according to claim 7, wherein the user identifier is a temporary identifier associated to a permanent identifier.

9. The secure login method according to claim 7, wherein the acquisition step is carried out via the reading of a QR code.
